# EUROPEAN PATENT APPLICATION

(11) **EP 2 693 288 A1**
(43) Date of publication of application: **05.02.2014**
(21) Application number: 12762921.0
(22) Date of filing: 16.03.2012
(51) Int. Cl.: G05F 1/67, H02J 3/38, H02M 3/155

(54) **POWER CONDITIONER SYSTEM**

(30) Priority: 30.03.2011 JP 2011076301; 30.03.2011 JP 2011076300; 28.04.2011 JP 2011101352
(71) Applicant: Sanyo Electric Co., Ltd., Osaka 570-8677 (JP)
(72) Inventor: MIYAUCHI Taku, Moriguchi-shi, Osaka 570-8677 (JP); ANDO Takashi, Moriguchi-shi, Osaka 570-8677 (JP)
(74) Representative: Glawe, Delfs, Moll
(86) International application number: PCT/JP2012/056803
(87) International publication number: WO 2012/132948

(57) **Abstract**

In the present invention, first boosting circuits (41 a to 41 d) are interposed upon each of direct current power lines (La to Ld). The boosting ratios of the first boosting circuits (41 a to 41 d), for each iteration of a first cycle, are variably controlled during a first period so that the generated power of the corresponding solar cell strings (1a to 1d) is maximized, and the boosting ratios during a second period are controlled so as to be maintained at a uniform value. The total amount of time of the first period and the second period is made to correspond to the first cycle.

## Description

### TECHNICAL FIELD

The present invention relates to an inverter system for boosting DC power supplied from solar cells, then converting to AC power, and superimposing same on a commercial power grid.

### BACKGROUND ART

There has been proposed in the past a inverter system having an inverter (power converting apparatus), having power lines for supplying the outputs of solar cells with boosting by boosters and source lines for directly supplying the outputs of the solar cells without boosting, and being used for collecting the outputs of the solar cells obtained from the two lines, then converting the outputs of the solar cells into AC power, and superimposing same on a commercial power grid (Patent Document 1).
Patent Document 1: Japanese Unexamined Patent Application No. 2041-309560

In such inverter system, an maximum power point tracking (MPPT) operation is performed in which the booster increases or decreases the boosting ratio between the input power and the output power of the booster so that the output power from the solar cell is maximized. Likewise also in the inverter (power converting apparatus), an MPPT operation is performed to operate so that the output DC power is maximized.

The MPPT operation of the booster increases or decreases the boosting ratio of the booster while monitoring the output power (value of the product of the current and the voltage) from the solar cell, and subsequently changes the boosting ratio in the same direction (increases if the boosting ratio is being increased or decreases if the boosting ratio is being decreased) when the output power from the solar cell is increased, or changes the boosting ratio in the opposite direction (decreases if the boosting ratio is being increased or increases if the boosting ratio is being decreased) when the power is decreased. By these controls, the boosting ratio of the booster converges toward the position where the output power from the solar cell is maximized.

The MPPT operation of the inverter makes use of the fact that the output power from the solar cell and the output power from the inverter circuit are almost equal even when taking conversion efficiency into account. The MPPT operation increases or decreases a target value of the current output to the system if the voltage of the system onto which the output of the inverter circuit 23 is overlaid is fixed, and uses the target current value with which the output power from the inverter circuit becomes the maximum value (that is, the maximum value of the input power to the inverter). At this time, the boosting ratio of the booster inside the inverter is controlled so that the target current value is outputted from the inverter circuit (boosting is performed until the current having the target current value flows).

The output power from the solar cell fluctuates when the MPPT operation of the booster is performed, and this fluctuation appears as fluctuation of the output power (output current) of the inverter. Therefore, when the MPPT operation of the booster and the MPPT operation of the inverter are performed simultaneously, the MPPT operation of the booster and the MPPT operation of the inverter may interfere with each other and the respective MPPT operations tend not to converge.

The inverter system according to Patent Document 1 alternatingly performs the MPPT operation of the booster and the MPPT operation of the inverter in order to eliminate such interference.

### DISCLOSURE OF THE INVENTION

### [Problems the Invention Is Intended To Solve]

However, in such inverter system, because the MPPT operations are performed in succession, the circuit for performing the MPPT operation being selected by a common control circuit as stated above, there is a problem that when power lines having boosters are added or subtracted, the information of the added or subtracted boosters must be set in the common control circuit, and circuit modifications, software updates, and other burdensome operations are required.

The present invention was contrived in consideration of the abovementioned problem, it being an object thereof to provide an inverter system in which interference of the MPPT operation performed by the booster with the MPPT operation performed by the inverter is suppressed.

### [Means for Solving the Abovementioned Problems]

The inverter system of the present invention is a inverter system in which DC power lines over which generated power is supplied from each of a plurality of solar cell strings having a plurality of solar cell modules connected in direct series are collected on a single power line, and the DC power on the power line, upon having subsequently passed through a second booster in which the boosting ratio is controlled so that the DC power is maximized, is converted to AC power using an inverter circuit; wherein the inverter system is characterized in that a first booster is interposed on each of the DC power lines, the inverter system being provided with a first control unit for variably controlling the boosting ratio of the first booster during a first period for each first cycle so that the generated power of the corresponding solar cell string is maximized, controlling the boosting ratio during a second period so that the boosting ratio is maintained at a fixed value, and making the total amount of time of the first period and the second period correspond to the first cycle.
There is also provided a second control unit for variably controlling the boosting ratio of the second booster during a third period for each second cycle so that the DC power on the power line is maximized, controlling the boosting ratio during a fourth period so that the boosting ratio is maintained at a fixed value, and making the total amount of time of the third period and the fourth period correspond to the first cycle; and the first cycle and the second cycle being different.

According to the present invention, there is provided a period in which the MPPT operation is not performed and the boosting ratio is fixed. Also, the cycles for beginning the MPPT operation of the booster and the inverter are set differently. Butting of the time bands in which the MPPT operation of the booster and the MPPT operation of the inverter are performed can thereby be suppressed. Therefore, interference of the MPPT operation of the booster with the MPPT operation of the inverter can be suppressed. Also, the booster and the inverter merely have different cycles for beginning the MPPT operation and do not operate under instruction from other circuits. Therefore, there is no need to perform special settings to the control circuit for controlling the booster or the inverter.

In the abovementioned invention, the second cycle is shorter than the first cycle.

In the abovementioned invention, the second period is set longer than the third period.

In the abovementioned invention, the fourth period is set longer than the first period.

In the abovementioned invention, the second control unit sets the boosting ratio of the second booster during the third period using a target value when the fluctuation range and/or the fluctuation rate of the DC power on the power line is within the target value.

In the abovementioned invention, the second control unit controls during the fourth period using as a fixed value the boosting ratio of the second booster set using a target value provided that the fluctuation range and/or the fluctuation rate of the DC power on the power line is within the target value when a transition is made from the third period to the fourth period.

In the abovementioned invention, the first cycle is divided into a first period in which variable control of the boosting ratio of the first booster is allowed and a second period in which variable control of the boosting ratio of the first booster is disallowed; the second cycle is divided into a third period in which variable control of the boosting ratio of the second booster is allowed and a fourth period in which variable control of the boosting ratio of the second booster is disallowed; and the fourth period is set longer than the first period.
In the abovementioned invention, the second cycle is divided into a third period in which variable control of the boosting ratio of the second booster is allowed and a fourth period in which variable control of the boosting ratio of the second booster is disallowed; and the target value of the output current of the AC power converted by the inverter circuit is fixed in the third period to the value at the time when the amount of fluctuation of the input power to the second booster is smaller than a prescribed amount.
In the abovementioned invention, the first booster continues a boosting operation using the boosting ratio calculated near the beginning of the second period, after variable control of the boosting ratio of the booster is begun and when the variable control is continued up to the second period; and the second booster continues an operation of converting the DC power to the AC power using the target value of the output current from the inverter circuit calculated near the beginning of the fourth period, after variable control of the boosting ratio of the booster is begun and when the variable control is continued up to the fourth period.
In the abovementioned invention, each of the boosters has a current sensor for detecting the current inputted to the booster or the current output from the booster, and each of the boosters begins variable control of the boosting ratio of each of the boosters when the current detected by the current sensor exceeds a prescribed value.

Another aspect of the abovementioned invention is a inverter system, comprising a current collection box having lines connected to each of a plurality of solar cells, and boosters interposed on the lines, the current collection box adapted for collecting and outputting the outputs of each of the lines, and the boosters adapted for boosting the output voltage from the solar cells; and a power converting apparatus for inputting DC power outputted by the current collection box, converting the DC power to AC power, and superimposing same on a commercial power grid; wherein the inverter system is characterized in that the booster alternatingly iterates a first period in which there is permission for variable operation of the boosting ratio of the booster operating so that the output power from the solar cells is maximized, and a second period in which variable operation of the boosting ratio of the booster is disallowed; the power converting apparatus alternatingly iterates a third period in which there is permission for variable operation of the boosting ratio of the booster of the power converting apparatus operating so that the DC power is maximized, and a fourth period in which variable operation of the boosting ratio of the booster is disallowed; and the length of the third period is configured to be changeable, and the length of the fourth period is fixed to a fixed length.

The current collection box of the present invention is a current collection box of a inverter system, the inverter system comprising the current collection box having lines connected to each of a plurality of solar cells, and boosters interposed on the lines, the boosters adapted for boosting the output voltage from the solar cells, and the current collection box adapted for collecting and outputting the outputs of each of the lines; and a power converting apparatus for inputting DC power outputted by the current collection box, converting the DC power to AC power, and superimposing same on a commercial power grid; wherein the current collection box is characterized in that the booster is configured using a non-insulated booster; the current collection box is provided with a current sensor for detecting current flowing in the non-insulated booster is provided; and the non-insulated booster boost the output voltage from the solar cell when the power converting apparatus begins operation and the current value detected by the current sensor is greater than a current threshold.

According to the present invention, because boosting of the output voltage of the solar cell is begun when the current detected by the current sensor is greater than the current threshold, the booster 41 is started after the inverter 2 is started and stable extraction of power from the solar cell 1 is confirmed. The operation of the booster 41 can thereby be prevented from becoming unstable.

In the abovementioned current collection box, there is provided a voltage sensor for detecting input voltage from the booster; a maximum value of the voltage value detected by the voltage sensor following cessation of the boosting operation of the booster is stored; and the output voltage from the solar cell is boosted when the voltage value detected by the voltage sensor becomes a value smaller by a prescribed amount relative to the maximum value and the current value detected by the current sensor is greater than the current threshold.

The current collection box of the present invention is also a current collection box of a inverter system, the inverter system comprising the current collection box having lines connected to each of a plurality of solar cells, and boosters interposed on the lines, the boosters adapted for boosting the output voltage from the solar cells, and the current collection box adapted for collecting and outputting the outputs of each of the lines; and a power converting apparatus for inputting DC power outputted by the current collection box, converting the DC power to AC power, and superimposing same on a commercial power grid; the current collection box characterized in that the booster is configured using a non-insulated booster; the current collection box is provided with a current sensor for detecting current flowing in the non-insulated booster and a voltage sensor for detecting input voltage to the non-insulated booster; and the output voltage from the solar cell is boosted when the power calculated from the current value detected by the current sensor and the voltage value detected by the voltage sensor is greater than a power threshold.

According to the present invention, because boosting of the output voltage of the solar cell is begun when the power supplied to the booster is greater than the power threshold, the booster 41 is started after the inverter 2 is started and stable extraction of power from the solar cell 1 is confirmed. The operation of the booster 41 can thereby be prevented from becoming unstable.

In the abovementioned current collection box, a maximum value of the voltage value detected by the voltage sensor following cessation of the boosting operation of the non-insulated booster is stored; and the output voltage from the solar cell is boosted when the voltage value detected by the voltage sensor becomes a value smaller by a prescribed amount relative to the maximum value and the power is greater than the power threshold.

In the abovementioned current collection box, the current threshold or the power threshold is configured to be changeable.

### [Merit of the Invention]

According to the present invention, there can be provided an inverter system in which interference of the MPPT operation performed by the booster with the MPPT operation performed by the inverter is suppressed.

### BRIEF DESCRIPTION OF THE DRAWINGS

FIG. 1 is a structural diagram illustrating a solar power system 100 according to the first embodiment;
FIG. 2 is a circuitry diagram of the booster of the current collection box of the inverter system of the first embodiment;
FIG. 3 is a circuitry diagram of the inverter of the inverter system of the first embodiment;
FIG. 4 is a flow chart illustrating the operation during startup of the booster of the current collection box in the first embodiment;
FIG. 5 is a flow chart illustrating the operation of the booster of the current collection box when performing the MPPT operation of the booster and the operation with fixed boosting ratio;
FIG. 6 is a flow chart illustrating the operation of the inverter when performing the MPPT operation of the inverter and the operation with fixed target current;
FIG. 7 is a time chart during operation of the current collection box and the inverter in the first embodiment;
FIG. 8 is an external view of the current collection box 4 of the inverter system according to the first embodiment;
FIG. 9 is a time chart during operation of the current collection box and the inverter in the second embodiment;
FIG. 10 is a structural diagram illustrating a solar power system 100 having a configuration in which the inverter 2 is not provided with a booster 21;
FIG. 11 is a structural diagram illustrating a solar power system 100 configured so that a solar cell 1a is directly connected on the output side of another booster 41;
FIG. 12 is a time chart when executing the MPPT operation of the booster when the fourth period is set to zero and the MPPT operation of the inverter;
FIG. 13 is a circuitry diagram of an insulated-type booster; and
FIG. 14 is a flow chart illustrating the operation during startup of the booster of the current collection box in the third embodiment.

### BEST MODE FOR CARRYING OUT THE INVENTION

### (First embodiment)

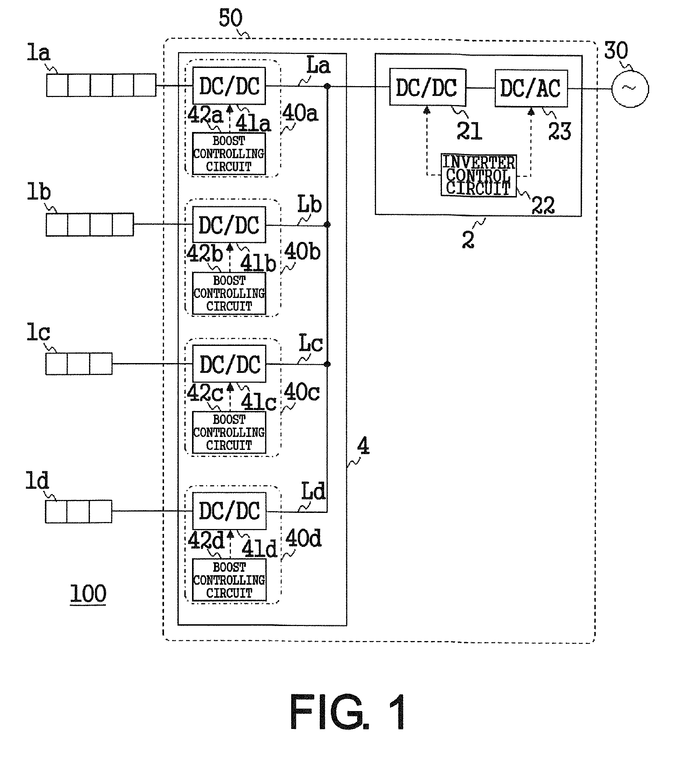

A first embodiment of the present invention is described in detail below based on the accompanying drawings. FIG. 1 is a structural diagram illustrating a solar power system 100 according to the first embodiment. The solar power system 100 is provided with solar cells 1a to 1d and an inverter system 50 as illustrated in the drawing. The inverter system 50 superimposes (supplies) power supplied by the solar cells 1a to 1d onto a commercial power grid 30.

The solar cells 1a to 1d are configured in string form having a plurality solar cells connected in direct series. The numbers of cells in the solar cells 1a to 1d changes in accordance with the area, or the like, over which the solar cells 1a to 1d are arranged, and therefore differ in accordance with the condition of arrangement of the solar cells 1a to 1d.

The configurative elements of the inverter system 50 can be stored in different housings divided into a current collection box 4 and an inverter 2, but the configurative elements can also be stored in a single housing not dividing into a current collection box 4 and an inverter 2. For purposes of simplification, the description in the first embodiment is given using a case in which the configurative elements are stored dividing into a current collection box 4 and an inverter 2.

The current collection box 4 has power lines (hereinafter simply referred to as "lines") La to Ld connected to each of the plurality of solar cells 1a to 1d, and boosting units 40a to 40d interposed on each of the lines La to L2. The current collection box 4 collects and outputs the power of the lines La to Ld. Each boosting unit 40a to 40d (corresponds to the first booster) has a booster 41 a to 41d for boosting the output power from each solar cell 1a to 1d. Each booster 41 a to 41 d has a boost controlling circuit 42a to 42d (corresponds to the first control unit) for controlling the boosting operation of a booster 41a to 41 d. Each booster 41a to 41d is interposed on a line La to Ld. Each boost controlling circuit 41a to 42d is connected to a booster 41 a to 41 d. The output sides of the boost controlling circuits 41a to 41d are connected into one inside the current collection box 4. The current collection box 4 collects into one the power boosted and output by the boosters 41 a to 41 d, and outputs the collected DC power to the inverter 2.

In the first embodiment, the same numerical reference symbol is given to elements of analogous constitution (e.g., the solar cells are designated "1"), and the same alphabetic reference symbol is given to elements in a connective relationship with one another (a solar cell 1 and a booster 41 in a connective relationship with each other are designated "solar cell 1a" and "booster 41 a," respectively).

Since it would be redundant to provide the same description in instances where the same operation is carried out in similar configurations, the suffixed reference symbols a, b, c, d may be omitted in the following description when the description relates to an operation shared among similar configurations.

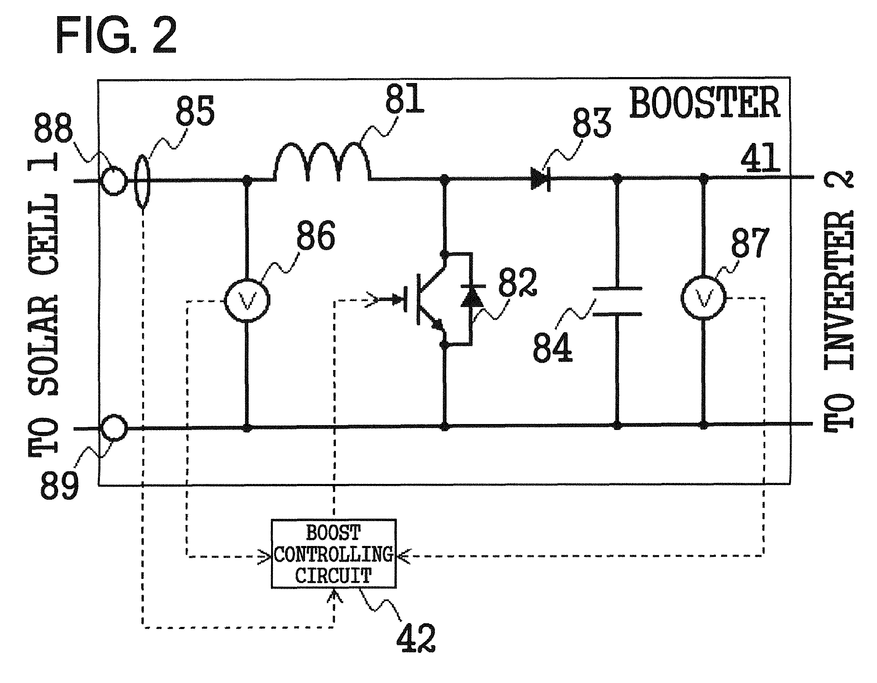

FIG. 2 is a circuitry diagram illustrating the current collection box and the booster of the inverter system of the first embodiment. For a booster 41, a "non-isolated booster" is used, which is configured to include: a pair of terminals 88, 89; a reactor 81, a switch element 82 such as an isolated gate bipolar transistor (IGBT), a diode 83, and a capacitor 84. The solar cell 1 is connected to the pair of terminals 88, 89, and the reactor 81 and the diode 83 are connected in series to one terminal (a positive-side terminal) 88 of the terminals 88, 89. The switch element 82 opens and closes between a connecting point between the reactor 81 and the diode 83, and the other terminal of the pair of terminals. The capacitor 84 is connected between the diode 83 and the other terminal.

The booster 41 has a current sensor 85 for detecting input current, a voltage sensor 86 for detecting input voltage, and a voltage sensor 87 for detecting output voltage. In the booster 41, the switch element 82 is cyclically opened and closed and the time when switch element 82 is open is controlled based on information obtained from the sensors to obtain a prescribed boosting ratio.

The inverter 2 is provided with a booster 21 for boosting the DC power outputted from the current collection box 4, an inverter circuit 23 for converting the DC power output from the booster 21 into AC power, and an inverter control circuit 22 (corresponds to the second control unit) for controlling the operations of the booster 21 (corresponds to the second booster) and the inverter circuit 23. The inverter 2 converts the DC power output from the current collection box 4 into AC power and superimposes (supplies) same onto the commercial power grid 30.

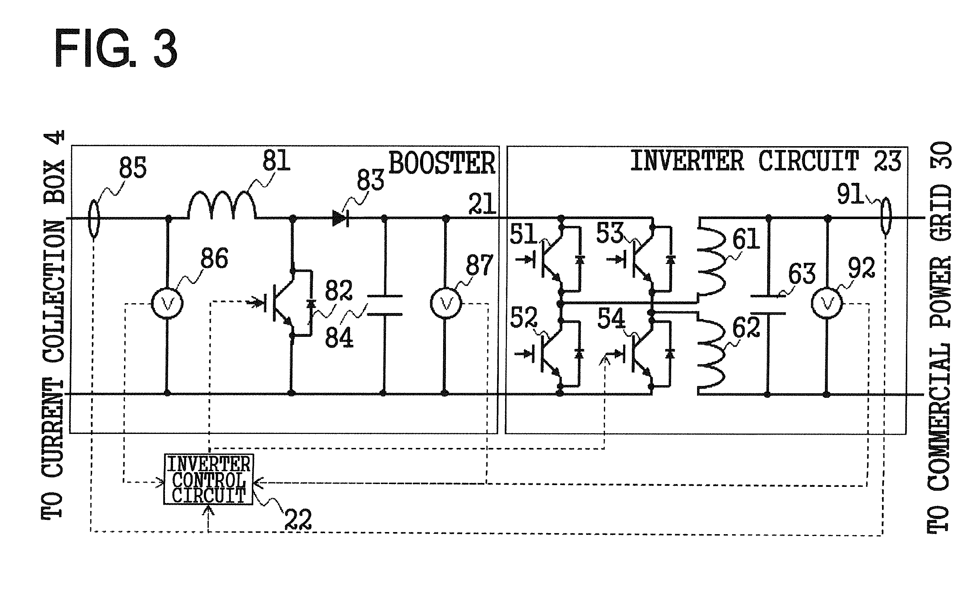

FIG. 3 is a circuitry diagram illustrating the inverter of the inverter system of the first embodiment. A circuitry configuration similar to that of the booster 41 can be used for the configuration of the booster 21, and therefore a description thereof is omitted. Though the booster 21 uses a similar circuitry configuration, a separate control is carried out by the inverter control circuit 22.

The inverter circuit 23 is configured with a first arm and a second arm connected in parallel, the first arm connecting switch elements 51 and 52 in direct series and the second arm connecting switch elements 53 and 54 in direct series. Semiconductor switches, for example, IGBTs or other such switch elements may be used for the switch elements 51 to 54. The inverter circuit 23 cyclically opens and closes the switch elements 51 to 54 in accordance with pulse width modulation (PWM) of the inverter control circuit 22. The inverter circuit 23 converts the DC power output from the booster 21 into three-phase AC power by opening and closing of the switches 51 to 54. A filter circuit (low-pass filter) including reactors 61 and 62 and a capacitor 63 is provided at the rear end of the inverter circuit 23 to remove the high frequency from the opening-and-closing operation of the switch elements 51 to 54.

The inverter circuit 23 has a current sensor 91 for detecting output current of the inverter circuit 23 and a voltage sensor 92 for detecting output voltage of the inverter circuit 23. The inverter control circuit 22 controls the booster 21 and the inverter circuit 23 using the current values or voltage values detected by the voltage sensors 86 and 87 and current sensor 85 of the booster 21 and the voltage sensor 92 and the current sensor 91 of the inverter circuit 23.

The operations of the booster 41 of the current collection box 4 and of the inverter 2 of the inverter system 50 of the first embodiment, as well as the inverter system 50, are described next.

### (Operation of booster of current collection box)

The operation of the inverter 2 tends to become unstable at the start of connection when the amount of sunlight is low because the power extracted from the solar cell 1 is unstable (the input voltage to the inverter 2 fluctuates greatly). Because the operation of the booster 41 also becomes unstable when the booster is operated in such conditions, in the present embodiment, the booster begins boosting after confirming the startup (connection) of the inverter 2.

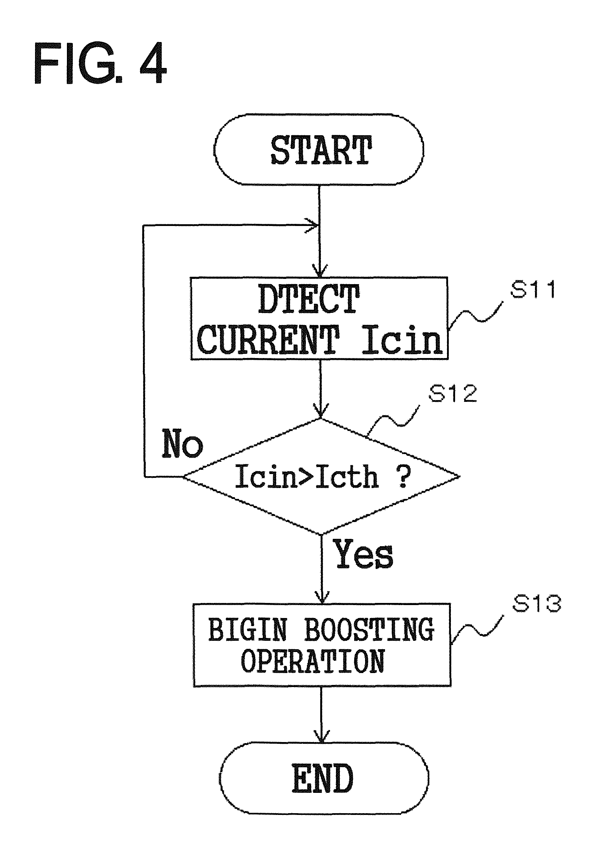

Because a non-insulated booster not having transistors, or the like, is used for the booster 41 of the current collection box 4, the output power from the solar cell is supplied to the inverter 2 via the reactor 81 and the diode 83 even when the boosting operation of the booster 41 is not being performed, and therefore, if this power reaches a fixed value or higher, the inverter 2 begins operation even if the booster 41 is not operating. When the inverter circuit 23 starts up and begins connection after the beginning of operation of the inverter 2, the current flowing through the booster 41, that is, the current detected by the current sensor 85 increases. Therefore, the startup (connection) of the inverter 2 can be confirmed by detecting the current. The operation during startup of the booster 41 is described using the drawings. FIG. 4 is a flow chart illustrating the operation during startup of the booster 41 of the current collection box 4 in the first embodiment.

In the startup processing of the booster 41, the input current Icin to the booster 41 is detected by the current sensor 85 (step S11), and a determination is made as to whether the input current Icin has exceeded a prescribed value Icth (step S13).

In the booster 41, a determination is made that the inverter has not been started when the input current Icin has not exceeded the prescribed value Icth, and the flow moves to step S11. Also, a determination is made that the inverter was started when the input current Icin has increased and exceeded the prescribed value Icth.

By such operation, because the booster 41 is started after the inverter 2 is started and stable extraction of power from the solar cell 1 is confirmed, the operation of the booster 41 can be prevented from becoming unstable.

By such operation, because the boosting operation is not performed while the input current Icin during startup is small, the frequency of opening and closing of the switch element 82 of the booster 41 can be reduced and the life of the switch element 82 can be prolonged.

When the operation during startup ends, the booster 41 begins an MPPT operation during a first period for each first cycle, operating so that the output power from the respectively connected solar cell 1 is maximized. Specifically, one cycle of the first cycle is divided into a first period in which the MPPT operation of the booster is allowed and a second period in which the MPPT operation of the booster is disallowed (the boosting ratio is not changed and the boosting ratio is maintained at a fixed value). The booster 41 performs the MPPT operation in the first period, and performs the operation with fixed boosting ratio, operating with a fixed (fixed) boosting ratio r, in the second period. Thus, the booster 41 iterates the MPPT operation of the booster and the operation with fixed boosting ratio for each first cycle.

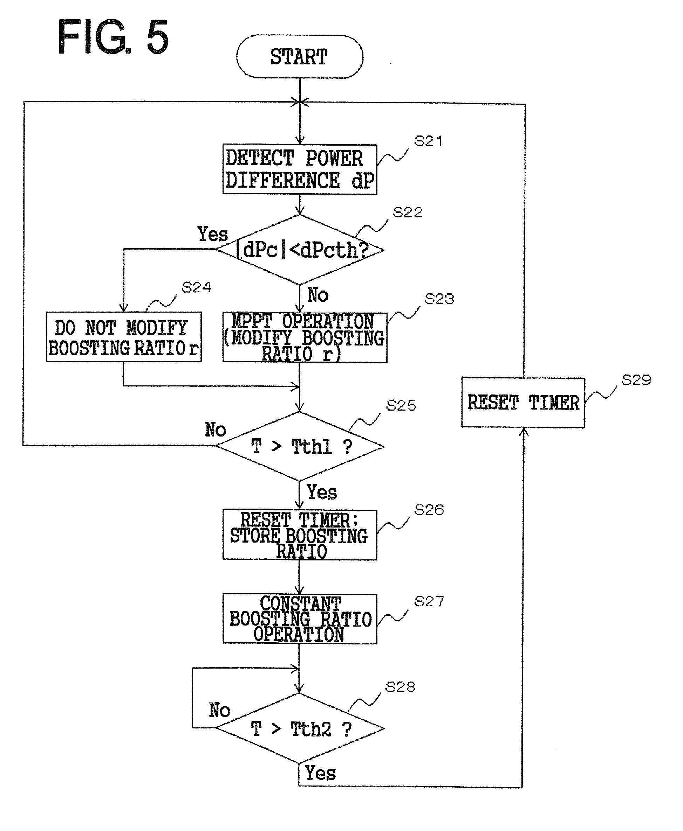

The operation of the booster 41 of iterating the MPPT operation and the operation with fixed boosting ratio is described using the drawings. FIG. 5 is a flow chart illustrating the operation of the booster when performing the MPPT operation and the operation with fixed boosting ratio. In the booster 41, when the iterative operation is begun, a counter value T of an additive timer is reset to zero (T = 0) and clocking is then begun, the input power Pc to the booster 41 is detected and stored (the symbol Pcd is assigned to the value of the input power stored), and a power difference dPc ((present power Pc) - (previous power Pcd)) is sought in step S21. The input power Pc (output power from the solar cell) can be sought by detecting the input voltage Vcin and the input current Icin to the booster 41 using the voltage sensor 86 and the current sensor 85, and integrating the input voltage Vcin and the input current Icin.

In step S22, a determination of power difference |dPc| < dPcth is made, and the boosting ratio r is fixed when the power difference dPc is smaller than the threshold dPcth (step S24). When the power difference dPc is greater than the threshold dPcth, the flow advances to step S23 and a new boosting ratio r is set as r = dr (MPPT operation of the booster 41). That is, the operation with fixed boosting ratio is performed when the output power Pc from the solar cell 1 is near the maximum value (|dPc| < dPcth is Yes), and the MPPT operation is performed when the output power Pc from the solar cell 1 is not near the maximum value (|dPc| < dPcth is No).

In the MPPT operation of the booster 41, if the power difference dPc is positive, the boosting ratio r is changed with the same content as the content when the previous boosting ratio r was changed (increased if the boosting ratio r is being increased or decreased if the boosting ratio r is being decreased); and if the power difference dPc is negative, the boosting ratio r is changed with different content from the content when the previous boosting ratio r was changed (decreased if the boosting ratio r is being increased or increased if the boosting ratio r is being decreased). When the processing of step S33 is performed for the first time, a decision is made in advance as to whether to increase or decrease the boosting ratio r, and the boosting ratio r is changed with that content.

Step S25 is a step in which the period to perform the MPPT operation is controlled, and in step S25, a determination (T > Tth1) is made as to whether the count value T has reached a value Tth1 corresponding to the time of the first period B (set suitably in coordination with the counter clock). In the present flow chart, the boosting ratio r is fixed in step S24 when dPc < dPcth, and when T > Tth1 is determined, the flow advances to the second period C and the flow continues with boosting ratio r unchanged.

Changing of the boosting ratio r by MPPT operation may also be performed until the first period B is clocked without making a determination of dPc < dPcth in

### step S22.

When dPc < dPcth is not satisfied when clocking of the first period B by timer is determined in step S25, the boosting ratio r is fixed at that time and the second period C is begun. That is, the MPPT operation ends for the time being.

The operation during the second period C in which the MPPT operation is disallowed (operation with fixed boosting ratio) is executed from step S26 to step S28. Specifically, upon entering the second period C, the counter value T is first reset and the boosting ratio r at this time is stored (step S36). The inverter 2 is then controlled fixing to the stored boosting ratio r (step S37), and the period in which the operation with fixed boosting ratio is performed is controlled (step S38). In step S38, a determination (T > Tth2) is made as to whether the count value T has reached a value Tth2 corresponding to the time of the second period C (set suitably in coordination with the counter clock).

When the second period C elapses, the count value of the timer T is reset to zero (step S39), the flow then returns again to step S31, and the MPPT operation is begun changing the boosting ratio r. In the second period C, the boosting ratio r at the time when clocking of the first period B ended is fixed and is used for control.

The booster 41 thus iterates the MPPT operation of the booster and the operation with a fixed boosting ratio by iterating steps S21 to S29.

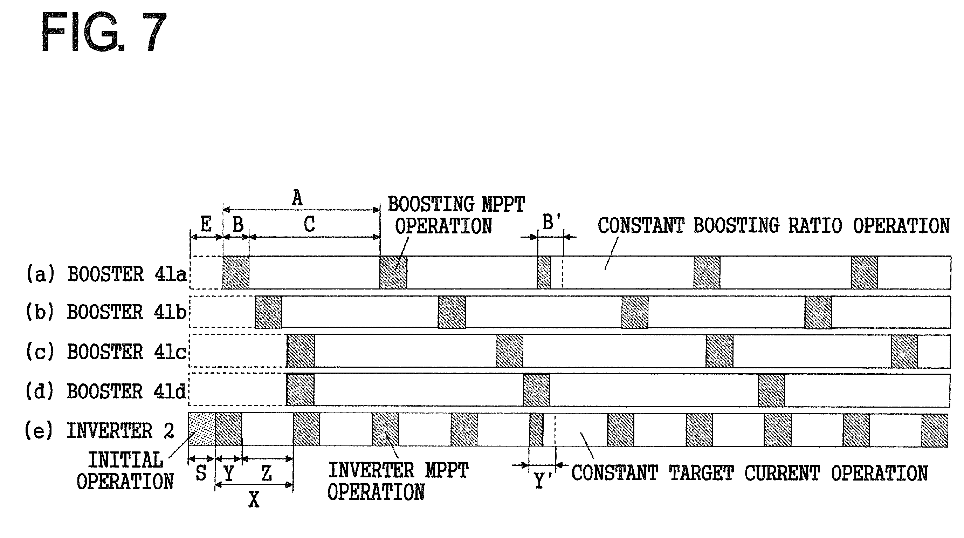

In the booster 41, a determination is made as to whether the output power Pc from the solar cell 1 is near the maximum value, and a decision is made to operate with the MPPT operation or without changing the boosting ratio (with fixed boosting ratio); and after the first period B elapses, the operation with fixed boosting ratio is begun with the MPPT operation being disallowed. Therefore, the booster 41 switches from the MPPT operation to the operation with fixed boosting ratio when the output power from the solar cell 1 becomes near the maximum value during the MPPT operation during the first period B (see FIGS. 7, 9, and 12 B' to be described). By such operation, the period for performing the operation with fixed boosting ratio can be increased during a fixed first cycle A, and therefore the period for performing the MPPT operation of the booster, which influences the MPPT operation of the inverter, can be shortened.

### (Operation of inverter)

The inverter 2 begins an initial operation before beginning connection when the input voltage exceeds a prescribed value (for example, about 100 V). In the inverter 2, the booster 21 inside the inverter 2 begins boosting when the input voltage exceeds a prescribed value (for example, about 100 V) in the initial operation. Also in the inverter 2, when the voltage boosted by the booster 21 reaches a prescribed value (for example, about 300 V), the inverter 23 starts generating AC power phase-synchronized with the commercial power grid, closes a system connection relay (not shown), and starts a connection.

The inverter 2 during system connection begins the MPPT operation of the inverter 2 for each second cycle X, operating so that the DC power collecting the power output from the solar cells 1a to 1d is maximized. Specifically, one cycle of the second cycle X is divided into a third period Y in which the MPPT operation of the inverter 2 is allowed and a fourth period Z in which the MPPT operation of the inverter 2 is disallowed. The inverter 2 performs the MPPT operation in the third period Y, and performs the operation with fixed target current, operating so that a target value of output current from the inverter circuit 23 of the inverter 2 is held fixed, in the fourth period Z. Thus, the inverter 2 iterates the MPPT operation of the inverter 2 and the operation with fixed target current for each second cycle during system connection.

The MPPT operation of the inverter 2 in one example is performed in the following manner. The input power Ppin (product of input current Ipin and input voltage Vpin) supplied to the booster 21 becomes substantially equal to the output power Ppo overlaid on the commercial power grid 30 when the conversion efficiency of the inverter 2 is 100%. (The conversion efficiency is hereinafter taken as 100%, but a suitable constant may be subtracted when considering the conversion efficiency.) Because the power output from the solar cell 1 is supplied to the inverter 2 via the current collection box B to become the input power Ppin, the value of the input power Ppin changes when the amount of power generated by the solar cell 1 changes. Because the input power Ppin and the output power Ppo are substantially the same, the input power Ppin can be sought from the output current Ipo supplied to the commercial power grid 30 if the voltage of the commercial power grid 30 is fixed (for example, AC 200 V in single-phase, three-wire type). Accordingly, the output power Ppo value can be matched to the power presently generated by the solar cell 1 by changing the output current Ipo.

The inverter circuit 23 controls ON/OFF switching of the switching elements 51 to 54 with PWM-based switching signals obtained by modulating the carrier wave and the sinusoidal modulation wave, and outputs a single-phase pseudo-sine wave. Because the amplitude of the pseudo-sine wave at this time becomes the voltage output from the booster 21, the output current Ipo can be controlled by changing the boosting ratio of the booster 21. Accordingly, at the maximum value of the power presently generated by the solar cell 1, the output current Ipo should be controlled with a target value It at which the input power Ppin is maximized when the target value It of the output current Ipo is changed.

The booster 21 controls the ON duty of the switching element 82 based on a current difference dIp (current Ipo - target value It). The value of the ON duty is made smaller if the current difference dIp is positive, and the value of the ON duty is made larger if the current difference is negative. The gain at this time is suitably set.

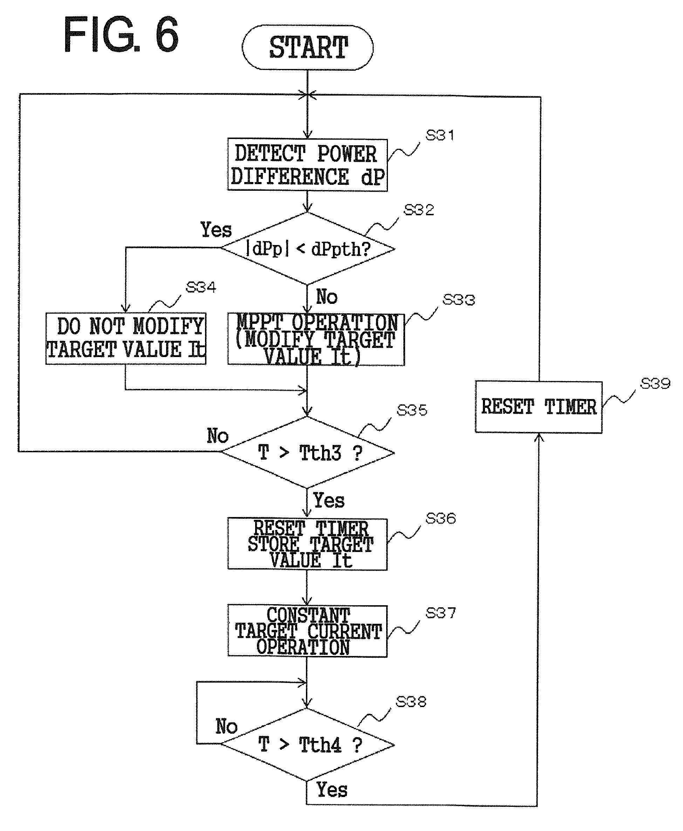

The operation of the inverter 2 of iterating the MPPT operation of the inverter 2 and the operation with fixed target current (operation during system connection) is described using the drawings. FIG. 6 is a flow chart illustrating the operation of the inverter during system connection.

In the inverter 2, when the operation during system connection is begun, a counter value T of an additive timer is reset to zero (T = 0) and clocking is then begun, the input power Ppin to the inverter 2 is detected and stored, and a power difference dPp ((present power Ppin) - (previous power Ppind)) is sought in step S31.

In step S32, a determination of power difference |dPp| < dPpth is made, and the target value It is fixed when the absolute value of the power difference |dPp| is smaller than the threshold dPpth (step S34). When absolute value of the power difference |dPp| is greater than the threshold dPpth, the flow advances to step S33 and a new target value It of the current is set as It = It + dI (MPPT operation of the inverter 2). That is, the operation with fixed target current is performed when the input power Ppin is near the maximum value (|dPp| < dPpth is Yes), and the MPPT operation is performed when the input power Ppin is not near the maximum value (|dPp| < dPpth is No).

In the MPPT operation of the inverter 2, if the power difference dPp is positive, the target value It is changed with the same content as the content when the previous target value It was changed (increased if the target value is being increased or decreased if the target value is being decreased); and if the power difference dPp is negative, the target value It is changed with different content from the content when the previous target value It was changed (decreased if the target value is being increased or increased if the target value is being decreased). When the processing of step S33 is performed for the first time, a decision is made in advance as to whether to increase or decrease the target value It, and the target value It is changed with that content.

Step S35 is a step in which the period to perform the MPPT operation is controlled, and in step S35, a determination (T > Tth3) is made as to whether the count value T has reached a value Tth3 corresponding to the time of the third period Y (set suitably in coordination with the counter clock). In the present flow chart, the target value It is fixed in step S34 when dPp < dPpth, and when T > Tth3 is determined, the flow advances to the fourth period Z and the flow continues with target value It unchanged.

Changing of the target value It by MPPT operation may also be performed until the third period Y is clocked without making a determination of dPp < dPpth in step S32.

When dPp < dPpth is not satisfied when clocking of the third period Y by timer is determined in step S35, the target value It is fixed at that time and the fourth period Z is begun. That is, the MPPT operation ends for the time being.

The operation during the fourth period Z in which the MPPT operation is disallowed (operation with fixed target current) is executed from step S36 to step S38. Specifically, upon entering the fourth period Z, the counter value T is first reset and the target value It at this time is stored (step S36). The inverter 2 is then controlled fixed to the stored target value It (step S37), and the period in which the operation with fixed target current is performed is controlled (step S38). In step S38, a determination (T > Tth4) is made as to whether the count value T has reached a value Tth4 corresponding to the time of the fourth period Z (set suitably in coordination with the counter clock).

When the fourth period Z elapses, the count value of the timer T is reset to zero (step S39), the flow then returns again to step S31, and the MPPT operation is begun changing the target value It of the output current Ipo. In the fourth period Z, the target value It at the time when clocking of the third period Y ended is fixed and is used for control.

If the fourth period Z is set to zero time, the MPPT operation will continue across a period of X of one cycle and the target value It will always be recomputed.

In the first embodiment, the input power Ppin is sought by the product of the input voltage Vpin and the input current Ipin of the booster 21, but this can also be replaced with the product of the input voltage and the input current of the inverter circuit 23.

The inverter 2 thus iterates the MPPT operation of the inverter 2 and the operation with fixed target current by iterating steps S31 to S39.

In the inverter 41, a determination is made as to whether the input power Ppin is near the maximum value, and a decision is made to operate with the MPPT operation or without changing the target value of the output current (with fixed target current); and after the second period X elapses, the operation with fixed target current is begun with the MPPT operation being disallowed. Therefore, the booster 41 switches from the MPPT operation to the operation with fixed target current when the input power Ppin becomes near the maximum value during the MPPT operation during the third period Y (see FIGS. 7 and 9 Y').

By such operation, the period for performing the operation with fixed target current can be increased during a fixed third cycle X, and therefore the period of butting (simultaneous occurrence) between the MPPT operation of the booster and the MPPT operation of the inverter can be shortened.

FIG. 7 is a time chart during operation of the current collection box and the inverter in the first embodiment. FIG. 7(a) to (d) respectively are time charts illustrating when the MPPT operation is performed by the boosters 41a to 41d, and FIG. 7(e) is a time chart illustrating when the MPPT operation is performed by the inverter 2.

In FIG. 7 (a) to (d), the whited-out period C corresponds to the abovementioned second period C in which the MPPT operation of the booster 41 is disallowed and the operation with fixed boosting ratio is performed, and the period B shaded with diagonal lines corresponds to the abovementioned first period B in which the MPPT operation of the booster 41 is performed. The period A, being the sum of the first period B and the second period B, corresponds to the first cycle A. The period E shaded with dotted lines corresponds to a period in which the boosters 41 a to 41d are not operating, or to a period in which operation during startup is being performed.

In FIG. 7(e), the whited-out period Z corresponds to the abovementioned fourth period Z in which the MPPT operation of the inverter 2 is disallowed and the operation with fixed target current is performed, and the period Y shaded with diagonal lines corresponds to the abovementioned third period Y in which the MPPT operation of the inverter 2 is performed. The period X, being the sum of the third period Y and the fourth period Z, corresponds to the second cycle X. The period S shaded with dots corresponds to the period in which the inverter 2 is performing the initial operation. In FIG. 7(e), the period in which the inverter 2 is not operating is present before the period in which the initial operation is performed, but is omitted here.

As is clear by referring to FIG. 7, the first cycle A is divided into a first period B in which the MPPT operation of the booster 41 is allowed and a second period C in which the MPPT operation of the booster 41 is disallowed, and the second cycle X is divided into a third period Y in which the MPPT operation of the inverter 2 is allowed and a fourth period Z in which the MPPT operation of the inverter 2 is disallowed. The length of the first cycle A and the length of the second cycle X are set differently. Therefore, the time bands in which the MPPT operation of the booster 41 and the MPPT operation of the inverter 2 are performed can be shifted, and interference of the MPPT operation of the booster 41 with the MPPT operation of the inverter 2 can be suppressed. Also, because the booster 41 and the inverter 2 merely have different control periods and do not operate under instruction from other circuits, there is no need to perform special settings to the control circuit for controlling the circuits, and the number of lines interposing boosters for boosting the output voltage of solar cells and supplying power can be easily increased or decreased.

The length of the first cycle A is shorter than the length of the second cycle X. Maximization of the output power of the grid interconnected system 50 as a whole is thereby performed frequently, and maximization of the output power of individual solar cells is performed slowly.

The length of the second period C is set longer than the length of the third period Y. Therefore, one round of the MPPT operation of the inverter 2 can be completed during the second period C in which there is no influence of the MPPT operation of the booster 41, and therefore interference of the MPPT operation of the booster 41 with the MPPT operation of the inverter 2 can be further suppressed.

The length of the fourth period Z is set longer than the length of the first period B. Therefore, one round of the MPPT operation of the booster can be completed within the fourth period. Interference of the MPPT operation of the booster with the MPPT operation of the inverter 2 can thereby be further suppressed.

The cycle in which the MPPT operation of a booster is begun and the cycle in which the MPPT operation of another booster is begun are set differently (in the first embodiment, all first cycles A are set to different lengths). Therefore, the timing for performing the MPPT operations of each booster of the boosters 41 a to 41 d can be shifted as illustrated in FIG. 7. The number of time bands in which the MPPT operation of the inverter 2 is performed with a plurality of boosters 41 a and 41 d at the same time can be reduced. Simultaneous interference of the MPPT operations of boosters 41 of the boosters 41 a to 41 d with the MPPT operation of the inverter 2 can thereby be suppressed.

When the first cycles A of the boosters 41 a to 41 d are set differently and the first cycles are set longer for the solar cells having greater output (for example, rated output power or number of solar cells in series) among the boosters 41 a to 41d, the number of opportunities for performing the MPPT operation decreases for the solar cells having greater output power and having greater fluctuation of output power when performing the MPPT operation of the booster 41. In this case, the number of opportunities for performing the MPPT operation of the booster 41, which greatly interferes with the MPPT operation of the inverter 2, decreases, and interference of the MPPT operation of the booster 41 with the MPPT operation of the inverter 2 can be further suppressed.

When the first cycles A of the boosters 41 a to 41 d are set differently and the first cycles A are set shorter for the solar cells having greater output (for example, rated output power or number of solar cells in series) among the boosters 41 a to 41 d, the number of opportunities for performing the MPPT operation of the booster 41 increases for the solar cells extracting greater power, and therefore more power is easily extracted from the solar cells 1a to 1d.

The length obtained by adding the lengths of the first periods B within each first cycle A of the boosters 41 a to 41 d is set to be less than the length of any second period C of the boosters 41 a to 41 d.

A time band in which the MPPT operation of the boosters 41 is not performed by any of the boosters 41a to 41d can thereby be created within the first cycle of the booster 41 having the longest cycle. Therefore, a time band in which there is no interference of the MPPT operation of the boosters 41 on the MPPT operation of the inverter 2 can be created within the first cycle of the booster 41 having the longest cycle, and this can be linked to suppression of interference of the MPPT operation of the boosters 41 on the MPPT operation of the inverter 2.

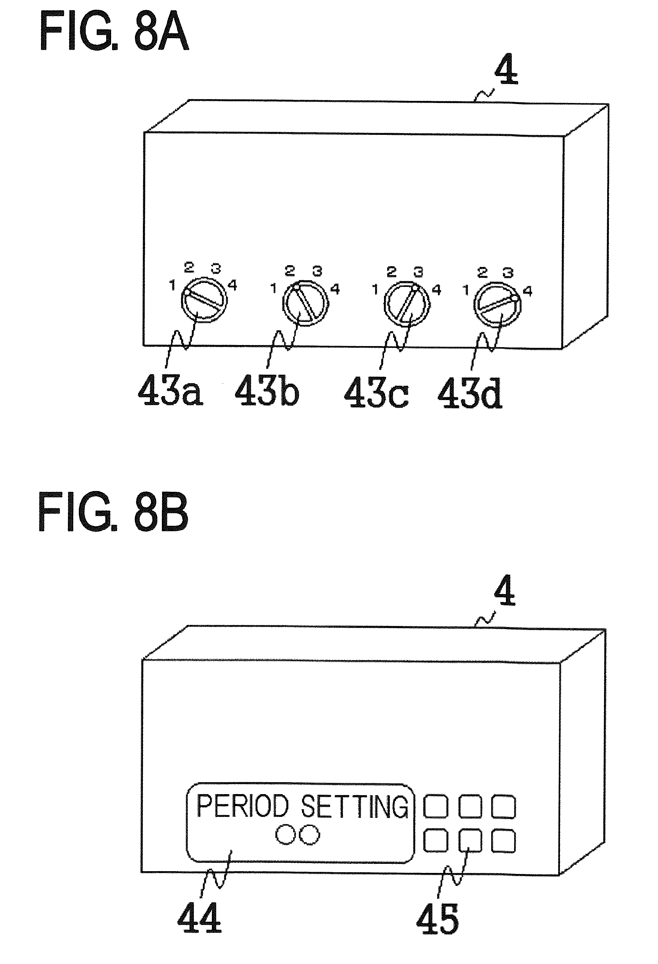

The boosters 41a to 41d of the present embodiment have a configuration in which the first cycle A is changed. FIG. 8 is an external view of the current collection box 4 of the present embodiment. For example, as illustrated in FIG. 8 (a), rotary switches 43a to 43d may be provided for the number of boosters 41, and the first cycles A of the boosters 41a to 41d may be changed using each of the rotary switches 43a to 43d. In this case, a booster 41a to 41d is assigned to each of the rotary switches 43a to 43d, and the lengths of the first cycles A can be set in accordance with the rotational positions of the rotary switches 43a to 43d. Also, for example, as illustrated in FIG. 8 (b), the first cycles A of the boosters 41 a to 41d may be made changeable by operating buttons 45 while looking at a display unit 44.

### (Second embodiment)

In the first embodiment, a case in which the second cycle X is shorter than the first cycle A was described, but in the second embodiment, the second cycle X is set longer than the first cycle A. The same kind of configuration as the configuration hitherto described can be used for the rest of the configuration, and the description is therefore omitted.

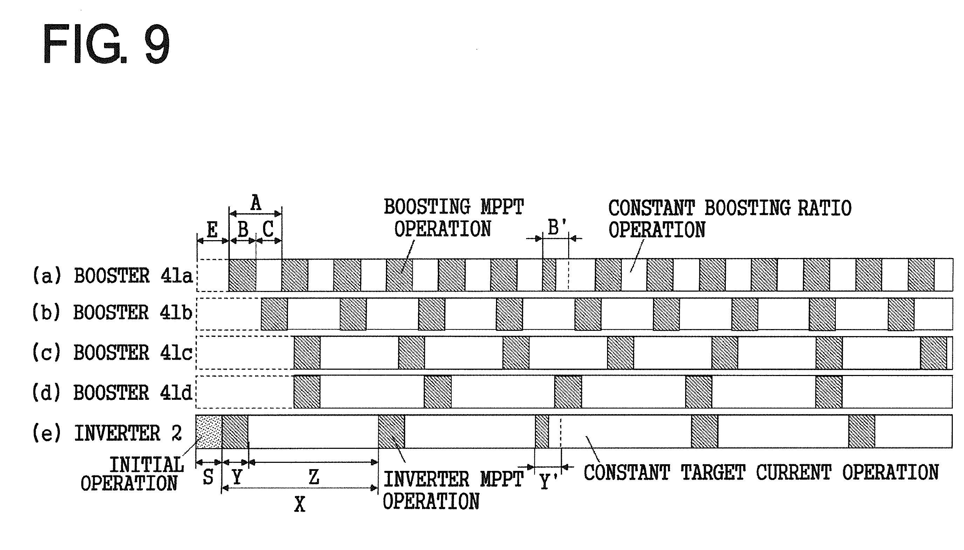

FIG. 9 is a time chart during operation of the current collection box and the inverter in the second embodiment. FIG. 9 (a) to (d) respectively are time charts illustrating when the MPPT operation is performed by the boosters 41a to 41d, and FIG. 9 (e) is a time chart illustrating when the MPPT operation is performed by the inverter 2.

In FIGS. 9 (a) to (d), the cycles and periods A to C, E, S, Y, and Z express the same as in FIG. 7, and the description is therefore omitted.

As illustrated in FIG. 9, the length of the second cycle X is longer than the length of the first cycle A. Maximization of the output power of the inverter system 50 as a whole is thereby performed slowly, and maximization of the output power of individual solar cells is performed frequently.

The length of the fourth period is set longer than the length of the first cycle A of each booster. A period in which at least one round of MPPT operation is performed by all boosters is thereby provided in the fourth period of the inverter 2. The MPPT operation of the inverter 2 is thereby performed after maximization of the output power of the individual solar cells is performed in all boosters 41a to 41 d, and therefore maximization of the output power of the inverter system 50 as a whole is easier to perform.

### (Third embodiment)

In the first embodiment, the booster 41 begins boosting of the output voltage of the solar cell 1 (begins the MPPT operation) when the inverter 2 begins operation and the current Icin detected by the current sensor 85 is greater than the current threshold Icth, but in the present embodiment, a method is described in which boosting of the output voltage of the solar cell 1 is begun when operation of the inverter 2 is begun, the power Pc supplied to the booster 41 (output power of the solar cell) is detected, and the power Pc is greater than a power threshold Pcth.

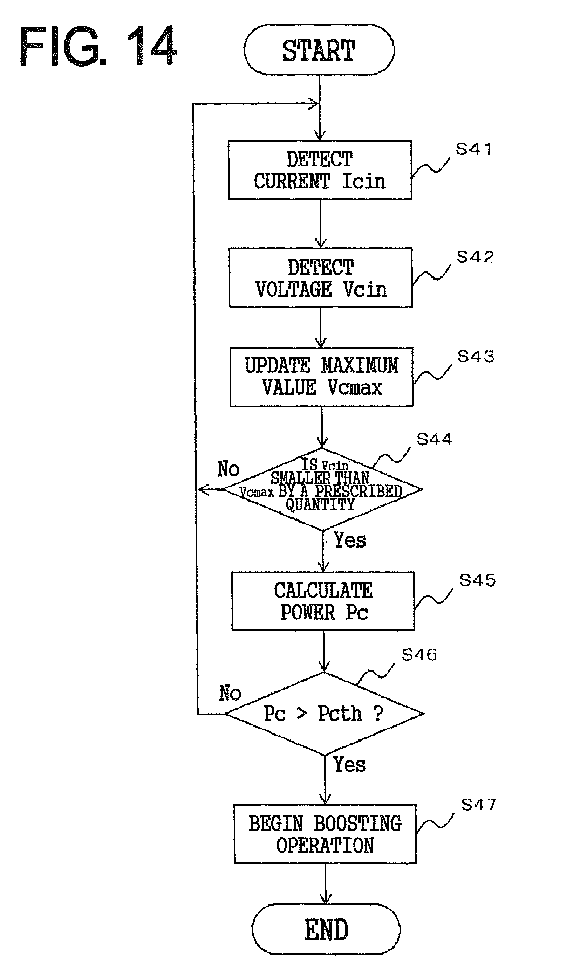

FIG. 14 is a flow chart illustrating the operation during startup of the boosters 41 a to 41 d of the current collection box 4 in the third embodiment.

When startup processing of the booster 41 is begun, the input current Icn to the booster 41 is detected using the current sensor 85 (step S41), and the input power Vcin to the booster 41 is detected using the voltage sensor 86 (step S42).

Next, in step S43, a maximum value Vcmax of the voltage Vcin detected by the voltage sensor 86 following cessation of the boosting operation of the booster 41 is updated in the booster 41, and the flow moves to step S44. Specifically, in the booster 41, the maximum value Vcmax and the input voltage Vcin are compared, and the maximum value Vcmax is updated using the detected voltage Vcin when the detected voltage Vcin is greater than the maximum value Vcmax (updating is not performed when the detected voltage Vcin is not greater than the maximum value Vcmax).

In step S44, a determination is made in the booster 41 as to whether the voltage Vcin is smaller than the maximum value Vcmax by a prescribed amount. In the booster 41, the flow returns to step S41 when a determination is made that the voltage Vcin is not smaller than the maximum value Vcmax by the prescribed amount. Also in the booster 41, the flow moves to step S45 when a determination is made that the voltage is smaller than the maximum value Vcmax by the prescribed value. Here, determination of whether the voltage Vcin is smaller than the maximum value Vcmax by a prescribed amount may be done by determining that Vcmax - Vcin is smaller than the prescribed amount, but may also be done by determining that Vcin/Vcmax is smaller than a prescribed value or that Vcmax/Vcin is greater than the prescribed value.

When the flow moves to step S45, the input power Pc to the booster 41 is calculated in the booster 41 from the product of the input current Icin detected in step S41 and the input voltage Vcin detected in step S42.

In the booster 41, a determination is then made as to whether the power Pc is greater than the power threshold Pcth (step S46). In the booster 41, the flow returns to step S41 when a determination is made that the power Pc is not greater than the power threshold Pcth. Also in the booster 41, when a determination is made that the power Pc is greater than the power threshold Pcth, the operation of the booster 41 is begun using a preset boosting ratio r (step S47), and the startup processing ends.

In the third embodiment as described above, the operation of the booster 41 (boosting of the output voltage of the solar cell 1) is begun when the voltage value Vcin detected by the voltage sensor 86 becomes a value smaller by a prescribed amount relative to the maximum value Vcmax. A drop of voltage of the solar cell 1 when startup (connection) of the inverter 2 is begun is thereby detected, and operation of the booster 41 begins, and therefore the operation of the booster 41 can be begun after startup of the inverter 2 is confirmed.

Also in the third embodiment, the booster 41 begins boosting the output voltage of the solar cell 1 when the input power Pc is greater than the power threshold Pcth. Therefore, the operation of the booster 41 can be begun after the inverter 2 is started (connected) and supply of a prescribed amount of power from the solar cell 1 is confirmed.

Also in the third embodiment, boosting of the output voltage of the solar cell 1 is begun when the voltage value Vcin detected by the voltage sensor 86 becomes a value smaller by a prescribed amount relative to the maximum value Vcmax and the power Pc is greater than the power threshold Pcth. The booster 41 can thereby be prevented from starting when the amount of sunlight drops due to change of the weather and the output voltage Vcin of the solar cell 1 drops.

Embodiments of the present invention are described above, but the above description is intended to facilitate understanding of the present invention and is not a limitation of the present invention. It shall be apparent that the present invention can be modified or improved without deviating from the main point thereof, and that equivalents are included in the present invention.

### (Modification 1)

For example, in the present embodiments, in the booster 41, the MPPT operation is disallowed and the operation with fixed boosting ratio is begun after a fixed first period B elapses, but the MPPT operation may be disallowed and the operation with fixed boosting ratio may be performed when a determination is made that the output power Pc of the solar cell 1 is near a maximum value. The length of the first period B is thereby configured to be changeable in accordance with the output power Pc of the solar cell 1, and the length of the second period C becomes fixed to a fixed length.

Specifically, because movement to the second period B occurs when the output power Pc of the solar cell 1 becomes near the maximum value, the length of the first period B becomes shorter and the length of the first cycle A also becomes shorter (the length of the first cycle A changes). When the length of the first cycle A changes, the timing for beginning the MPPT operation of the booster shifts. Therefore, the period in which the MPPT operation of the booster and the MPPT operation of the inverter 2 were performed simultaneously can be shifted, and therefore the influence of the MPPT operation of the booster 41 on the MPPT operation of the inverter 2 can be suppressed.

### (Modification 2)

For example, in the present embodiments, in the inverter 2, the MPPT operation is disallowed and the operation with fixed target current is begun after a fixed third period Y elapses, but the MPPT operation may be disallowed and the operation with fixed target current may be performed when a determination is made that the input power Ppin is near a maximum value. The length of the third period Y is thereby configured to be changeable in accordance with the input power Ppin, and the length of the fourth period Z becomes fixed to a fixed length.

Specifically, because movement to the fourth period Z occurs when the input power Ppin becomes near the maximum value, the length of the third period Y becomes shorter and the length of the second cycle X also becomes shorter (the length of the second cycle X changes). When the length of the second cycle X changes, the timing for beginning the MPPT operation of the inverter 2 shifts. Therefore, the period in which the MPPT operation of the booster and the MPPT operation of the inverter 2 were performed simultaneously can be shifted, and therefore the influence of the MPPT operation of the booster 41 on the MPPT operation of the inverter 2 can be suppressed.

### (Modification 3)

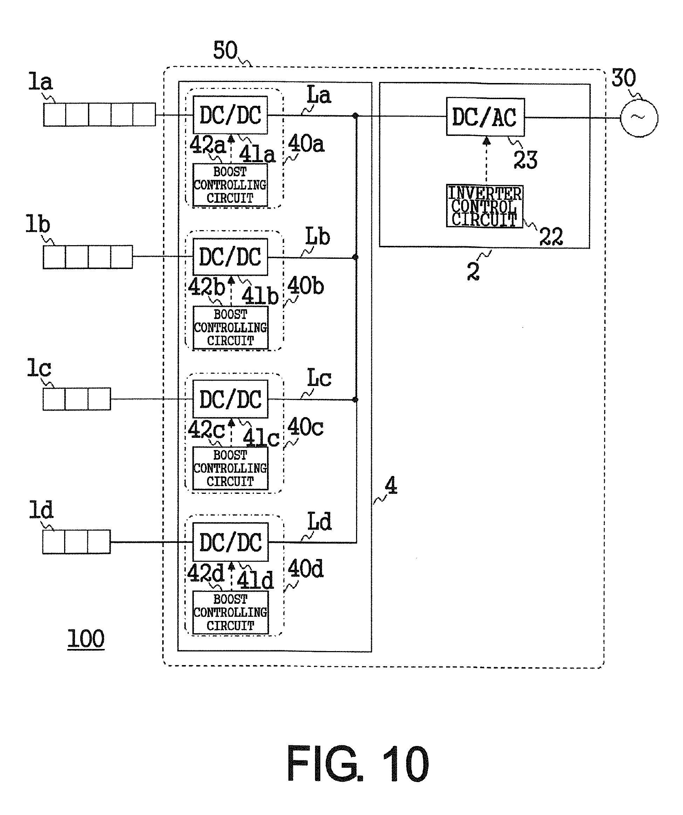

For example, in the present embodiments, a booster 21 is provided also in the inverter 2, but a configuration in which a booster 21 is not provided in the inverter 2 also can be adopted, as illustrated in FIG. 10.

### (Modification 4)

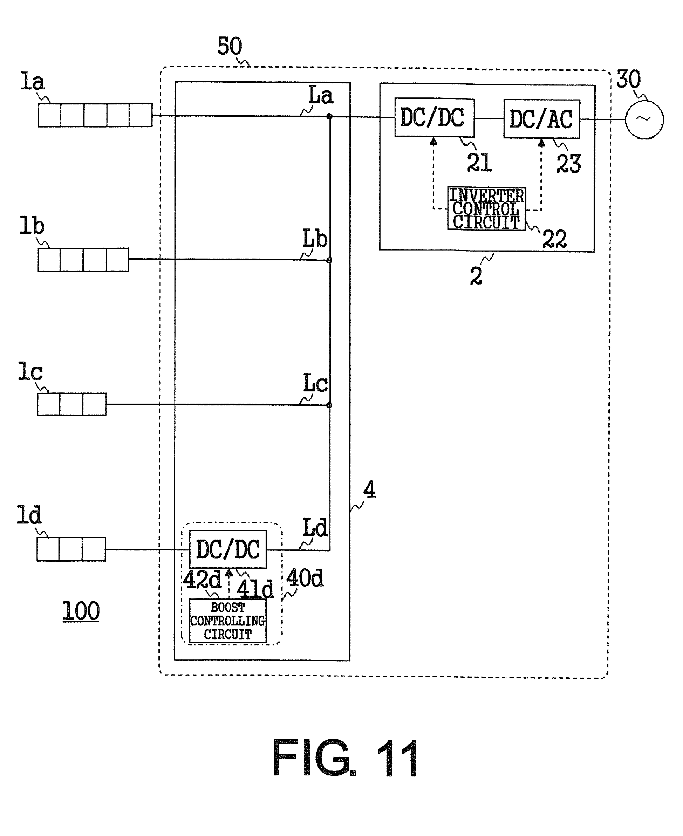

For example, in the present embodiments, a configuration in which boosters 41a to 43c (boosting units 40a to 40d) are connected to all solar cells 1a to 1d is used, but there may be no booster 41 (boosting unit 40) connected to any one solar cell 1, and the solar cell 1a may be directly connected to the output side of the booster 41, as illustrated in FIG. 11.

### (Modification 5)

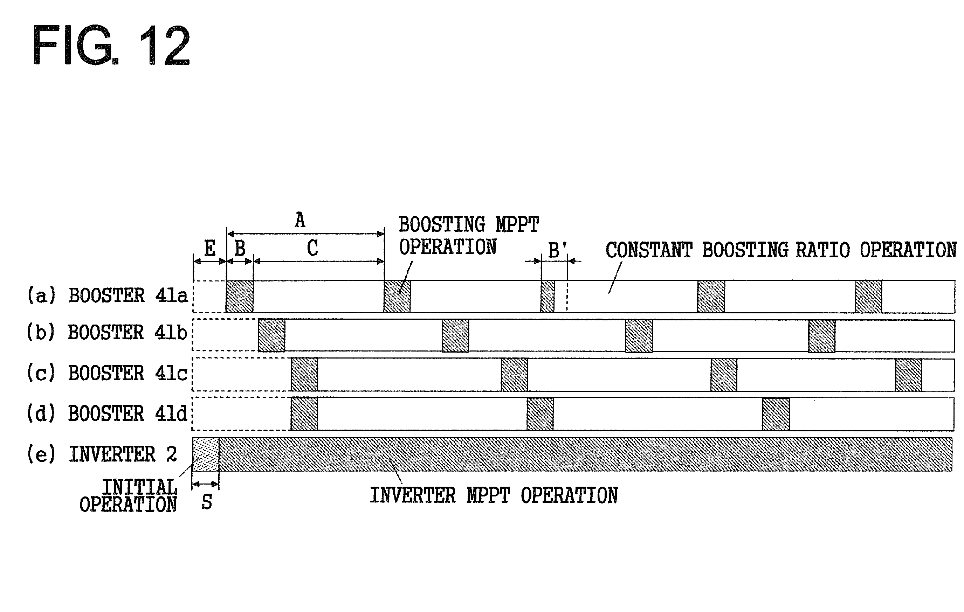

For example, in the present embodiments, a third period in which the MPPT operation of the inverter 2 is performed and a fourth period in which the MPPT operation of the inverter 2 is disallowed are provided and a fixed second cycle X is set, but the fourth period may be set to zero (see FIG. 12). In this case, the MPPT operation of the inverter 2 substantially comes to be performed at all times. Because a period in which the MPPT operation of the booster 41 is disallowed is provided in the first cycle A and a period arises in which the MPPT operation of the inverter 2 and the MPPT operation of the booster 41 of the current collection box 4 are not performed simultaneously, even if interference between the two MPPT operations occurs, the interference can be eliminated in this period. Accordingly, the MPPT operation of the inverter 2 is iterated with a timing of a program incorporated in the main routine of a microcomputer program in the inverter 2, and an operation of comparing the maximum power is performed and the boosting ratio is updated for each iteration cycle.

### (Modification 6)

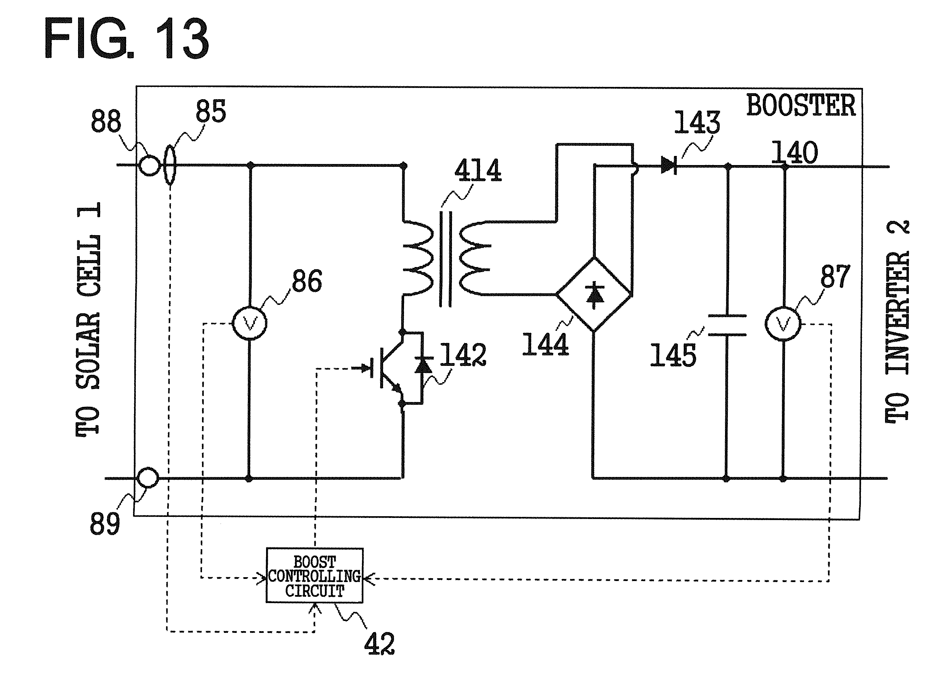

For example, in the present embodiments, a non-insulated booster is used for the booster 41 of the current collection box 4, but an insulated-type booster 140 using a transistor 141 can also be used, as illustrated in FIG. 13. The booster 140 has on the primary side a circuit in which the primary-side coil of the transistor 141 and a switch element 142 are connected in direct series. The booster 140 also has on the secondary side a circuit in which there is rectifier 144, the secondary-side coil of the transistor 141 is connected to the AC side of the rectifier 144, a diode 143 is connected in direct series on the DC side of the rectifier 144, and a capacitor 145 is connected in direct series on the serial circuit of the rectifier 144 and the diode 143.

The booster 140 also has a current sensor 85 for detecting input current, a voltage sensor 86 for detecting input voltage, and a voltage sensor 87 for detecting output voltage, and the switch element 142 is cyclically opened and closed based on the information obtained from the sensors to obtain a prescribed boosting ratio.

When such an insulated-type booster 140 is used, startup must be done from the current collection box 4 because the output power from the solar cell 1 is supplied to the inverter 2 when the switch element 142 is open. In the case of performing such operation, the operation of the insulated-type booster 140 can be dealt with by adding a step in which operation is performed with a fixed boosting ratio before the step S11 in FIG. 4. The booster 140 illustrated in FIG. 13 is one example of an insulated-type booster, and the same can also be achieved with other insulated-type boosters.

For example, in the present embodiments, a method for starting the booster 41 using the current threshold Icth or the power threshold Pcth is described, but the current threshold Icth or the power threshold Pcth may be configured to be changeable, and these thresholds may be set differently in each booster 41a to 41d.

For example, in the third embodiment, the operation of the booster 41 (boosting of the output voltage of the solar cell 1) is begun when the voltage value Vcin detected by the voltage sensor 86 becomes a value smaller by a prescribed amount relative to the maximum value Vcmax, but this may be applied also to the first embodiment. In this case, implementation is possible by adding the steps S42 to S44 in the operating flow in FIG. 14 directly before or directly after the step S11 in the operating flow in FIG. 4. The booster 41 can thereby be prevented from starting when the amount of sunlight drops due to change of the weather and the output voltage Vcin of the solar cell 1 drops.

### [Key to Symbols]

- 1a-1d: Solar cell
- 2: Inverter
- 4: Current collection box
- 21: Booster (second booster)
- 22: Inverter control circuit
- 23: Inverter circuit
- 30: Commercial power grid
- 40a-40d: Boosting unit
- 41a-41d: Booster(first booster)
- 42a-42d: Boost controlling circuit
- 43a-43d: Rotary switch
- 44: Display unit
- 45: Button
- 50: Inverter system

## Claims

1. An inverter system in which DC power lines over which generated power is supplied from each of a plurality of solar cell strings having a plurality of solar cell modules connected in direct series are collected on a single power line, and the DC power on the power line, upon having subsequently passed through a second booster in which a boosting ratio is controlled so that the DC power is maximized, is converted to AC power using an inverter circuit; wherein
the inverter system is **characterized in that**
a first booster is interposed on each of the DC power lines, the inverter system being provided with a first control unit for controlling a boosting ratio of the first booster during a first period for each first cycle so that the generated power of the corresponding solar cell string is maximized, controlling the boosting ratio of the first booster during a second period so that the boosting ratio of the first booster is maintained at a fixed value, and making the total time of the first period and the second period correspond to the first cycle.

2. The inverter system according to claim 1, **characterized in** being provided with a second control unit for controlling the boosting ratio of the second booster during a third period for each second cycle so that the DC power on the power line is maximized, controlling the boosting ratio of the second booster during a fourth period so that the boosting ratio of the second booster is maintained at a fixed value, and making the total time of the third period and the fourth period correspond to the first cycle; the first cycle and the second cycle being different.

3. The inverter system according to claim 3, **characterized in that** the second cycle is shorter than the first cycle.

4. The inverter system according to claim 2 or 3, **characterized in that** the second period is set longer than the third period.

5. The inverter system according to claim 2 or 3, wherein the fourth period is set longer than the first period.

6. The inverter system according to claim 2, **characterized in that** the second control unit sets the boosting ratio of the second booster during the third period using a target value when the fluctuation range and/or the fluctuation rate of the DC power on the power line is within the target value.

7. The inverter system according to claim 2 or 6, **characterized in that** the second control unit controls the second booster during the fourth period using as a fixed value the boosting ratio of the second booster set using a target value provided that the fluctuation range and/or the fluctuation rate of the DC power on the power line is within the target value when a transition is made from the third period to the fourth period.

8. The inverter system according to claim 1 or 2, **characterized in that** the fixed value used as the boosting ratio of each of the boosters during the second period or the fourth period is a boosting ratio set near the beginning of the second period or the fourth period.

9. The inverter system according to claim 2 or 3, **characterized in that**
the first cycle is divided into the first period in which variable control of the boosting ratio of the first booster is allowed and the second period in which variable control of the boosting ratio of the first booster is disallowed;
the second cycle is divided into the third period in which variable control of the boosting ratio of the second booster is allowed and the fourth period in which variable control of the boosting ratio of the second booster is disallowed; and
the fourth period is set longer than the first period.

10. The grid interconnected system according to claim 2 or 3, **characterized in that**
the second cycle is divided into the third period in which variable control of the boosting ratio of the second booster is allowed and the fourth period in which variable control of the boosting ratio of the second booster is disallowed; and
the target value of the output current of the AC power converted by the inverter circuit is fixed in the third period to the value at the time when the amount of fluctuation of the input power to the second booster is smaller than a prescribed amount.

11. The grid interconnected system according to claim 9 or 10, **characterized in that**
the first booster continues a boosting operation using the boosting ratio calculated near the beginning of the second period, after variable control of the boosting ratio of the first booster is begun and when the variable control is continued up to the second period; and
the second booster continues the an operation of converting the DC power to the AC power using the target value of the output current from the inverter circuit calculated near the beginning of the fourth period, after variable control of the boosting ratio of the second booster is begun and when the variable control is continued up to the fourth period.

12. The grid interconnected system according to any of claims 9 to 11, **characterized in that** each of the boosters has a current sensor for detecting the current inputted to the booster or the current outputted from the booster, and each of the boosters begins variable control of the boosting ratio of each of the boosters when the current detected by the current sensor exceeds a prescribed value.

13. A inverter system, comprising
a current collection box having lines connected to each of a plurality of solar cells, and boosters interposed on the lines, the current collection box adapted for collecting and outputting the outputs of each of the lines, and the boosters adapted for boosting the output voltage from the solar cells; and
a power converting apparatus for inputting DC power outputted by the current collection box, converting the DC power to AC power, and superimposing onto a commercial power grid;
the inverter system being **characterized in that**
the booster alternatingly iterates a first period in which variable operation of the boosting ratio of the booster operating so that the output power from the solar cells is maximized is allowed, and a second period in which variable operation of the boosting ratio of the booster is disallowed;
the power converting apparatus alternatingly iterates a third period in which variable operation of the boosting ratio of the booster of the power converting apparatus operating so that the DC power is maximized is allowed, and a fourth period in which variable operation of the boosting ratio of the booster is disallowed; and
the length of the third period is configured to be changeable, and the length of the fourth period is fixed to a fixed length.

14. __A current collection box of an inverter system, the comprising
the current collection box having lines connected to each of a plurality of solar cells, and boosters interposed on the lines, the boosters adapted for boosting the output voltage from the solar cells, and the current collection box adapted for collecting and outputting the outputs of each of the lines; and
a power converting apparatus for inputting DC power outputted by the current collection box, converting the DC power to AC power, and superimposing same on a commercial power grid;
wherein the current collection box **characterized in that**
the booster is configured using a non-insulated booster;
the current collection box is provided with a current sensor for detecting current flowing in the non-insulated booster; and
the non-insulated booster boost the output voltage from the solar cell when the power converting apparatus begins operation and the current value detected by the current sensor is greater than a current threshold.

15. The current collection box according to claim 14, **characterized in** being provided with a voltage sensor for detecting input voltage to the booster;
a maximum value of a voltage value detected by the voltage sensor following cessation of the boosting operation of the booster being stored; and
the output voltage from the solar cell being boosted when the voltage value detected by the voltage sensor becomes a value smaller by a prescribed amount relative to the maximum value and the current value detected by the current sensor is greater than the current threshold.

16. A current collection box of An inverter system comprising:
the current collection box having lines connected to each of a plurality of solar cells, and boosters interposed on the lines, the boosters adapted for boosting the output voltage from the solar cells, and the current collection box adapted for collecting and outputting the outputs of each of the lines; and
a power converting apparatus for inputting DC power outputted by the current collection box, converting the DC power to AC power, and superimposing on a commercial power grid;
the current collection box **characterized in that**
the booster is configured using a non-insulated booster;
the current collection box is provided with:
a current sensor for detecting current flowing in the non-insulated booster and
a voltage sensor for detecting input voltage to the non-insulated booster; and
the output voltage from the solar cell when the power calculated from the current value detected by the current sensor and the voltage value detected by the voltage sensor is greater than a power threshold.

17. The current collection box according to claim 16, **characterized in that**:
a maximum value of a voltage value detected by the voltage sensor following cessation of the boosting operation of the non-insulated booster is stored; and
the output voltage from the solar cell is boosted when the voltage value detected by the voltage sensor becomes a value smaller by a prescribed amount relative to the maximum value and the power is greater than the power threshold.

18. The current collection box according to any of claims 14 to 17, **characterized in that** the current threshold or the power threshold is configured to be changeable.
